# FASCICULE DE BREVET EUROPEEN

(11) **EP 3 003 786 B1**
(45) Date de publication et mention de la délivrance du brevet: **20.02.2019**
(21) Numéro de dépôt: 14745195.9
(22) Date de dépôt: 30.06.2014
(51) Int. Cl.: B60R 13/04, B60J 1/06, B60R 19/20

(54) **DISPOSITIF DE PROTECTION DE LA CARROSSERIE D'UN VÉHICULE TERRESTRE**
VORRICHTUNG ZUM SCHUTZ DER KAROSSERIE EINES LANDFAHRZEUGS
DEVICE FOR PROTECTING THE BODYWORK OF A LAND VEHICLE

(30) Priorité: 28.06.2013 FR 1356317; 19.07.2013 FR 1357164; 19.07.2013 FR 1357165; 19.07.2013 FR 1357166; 04.02.2014 FR 1450863
(43) Date de publication de la demande: 13.04.2016
(73) Titulaire: Redoux, Jean-luc, 34970 Lattes (FR); Fouche, Patrick, 34750 Villeneuve les Maguelones (FR)
(72) Inventeur: REDOUX, Jean-Luc, F-34970 Lattes (FR)
(74) Mandataire: Cornuejols, Georges
(86) Numéro de dépôt international: PCT/FR2014/051672
(87) Numéro de publication internationale: WO 2014/207413

(56) Documents cités:
- FR-A1- 2 672 261
- FR-A1- 2 805 220
- US-A- 4 014 583
- US-A- 5 156 425
- US-A1- 2006 220 400
- US-A1- 2012 032 462

## Description

### DOMAINE TECHNIQUE DE L'INVENTION

La présente invention vise un dispositif amovible de protection de la carrosserie d'un véhicule terrestre, une portière de véhicule et un véhicule. Elle s'applique notamment à la protection de portières de voitures, en particulier dans des aires de stationnement (« parkings »).

### ETAT DE LA TECHNIQUE

Lorsqu'une voiture est garée, dans un parking par exemple, elle risque de subir des chocs liés à l'ouverture de portières de véhicules garés à proximité. Ces chocs, dont l'aspect esthétique est déplaisant pour le propriétaire de la voiture endommagée, entraînent des coûts de réparation ou une baisse de valeur de la voiture.

Pour remédier à cet inconvénient, certains véhicules comportent sur leur longueur une barre en matière plastique, vissée ou rivetée, pour réduire l'impact des chocs reçus. Cependant, la tendance actuelle des constructeurs automobiles est au retrait de ces barres latérales, en particulier dans les véhicules haut de gamme. De plus, ces barres latérales ne protègent que très localement la carrosserie du véhicule qui en est équipé.

Le document US 4 014 583 enseigne une protection de portière suspendue à partir de la partie haute d'une portière et munie d'aimants. Ce dispositif présente plusieurs inconvénients. En particulier les risques de rayure de la carrosserie du véhicule sont importants, soit pendant le positionnement ou le retrait du dispositif, soit lors d'un choc sur ce dispositif (du fait de la portière d'un autre véhicule ou d'un chariot de supermarché). En effet, la conception pendulaire de ce dispositif, retenue par des sangles verticales et l'adhérence due aux aimants provoquent des frottements horizontaux qui appuient toute particule solide, par exemple un grain de sable, sur la surface de la portière. Pendant l'installation ou en cas de choc, cette particule raye donc d'autant plus facilement la surface de la portière que l'aimant enfonce cette particule dans la peinture de la portière.

FR 2672261 décrit un dispositif à attaches haute, selon le préambule de la revendication 1, à insérer dans le joint de vitrage de la portière et à attache basse à attacher à la partie basse de la portière. Ce dispositif présente donc plusieurs inconvénients. D'une part, il peut être aisément volé. D'autre part, ce dispositif abime les joints de vitrage et empêche leur étanchéité. Enfin, la mise en position de ce dispositif impose à l'utilisateur de se baisser pratiquement au niveau du sol pour ce qui concerne l'attache basse.

### OBJET DE L'INVENTION

La présente invention vise à remédier à tout ou partie de ces inconvénients.

A cet effet, la présente invention vise, selon un premier aspect, un dispositif tel que défini dans la revendication 1.

Grâce à ces dispositions, l'utilisateur d'un véhicule peut, à l'arrêt, installer le dispositif de protection, portière ouverte, et protéger les portières de ce véhicule de chocs, ceux-ci étant absorbés par le premier corps. De plus, le moyen d'attache primaire étant inamovible, le vol du dispositif sans endommager le dispositif et/ou l'ouvrant est impossible lorsque l'ouvrant est fermé. De surcroit, les moyens d'attache sont amovibles sans outil, facilitant la mise en place et le retrait du dispositif par un utilisateur lorsque l'ouvrant est ouvert. Grâce à l'attache pour un corps supplémentaire, soit fixe, soit amovible, le même dispositif peut protéger deux portières du véhicule. Dans le cas d'une attache amovible, la longueur du corps est modulable par un utilisateur. Ainsi, le dispositif est adapté à protéger tout type de véhicule terrestre.

Dans des modes de réalisation, le dispositif objet de la présente invention comporte un moyen d'émission d'un signal sonore et un déclencheur du moyen d'émission du signal sonore lorsque le dispositif est touché par un véhicule ou écrasé entre deux véhicules. L'avantage de ces modes de réalisation est qu'ils permettent de notifier au conducteur d'un véhicule que son véhicule entre en contact avec le dispositif objet de la présente invention porté par un autre véhicule. Celui qui provoque l'appui sur le dispositif est ainsi informé de ce contact et peut l'interrompre plus rapidement, ce qui limite les risques d'endommagement du véhicule protégé par le dispositif.

Dans des modes de réalisation, au moins un moyen d'attache primaire est un crochet, entourant au moins partiellement une bordure de l'ouvrant, configuré pour être fixé lorsque l'ouvrant du véhicule est ouvert. Ces modes de réalisation permettent de fixer rapidement le moyen d'attache primaire et, lorsque ce moyen d'attache primaire est fixé, d'assurer la protection antivol du dispositif.

Dans des modes de réalisation, au moins un moyen d'attache secondaire est un aimant fixé sur la carrosserie du véhicule. L'avantage de ces modes de réalisation est qu'ils permettent de fixer le premier corps du dispositif simplement par apposition de l'aimant sur la carrosserie du véhicule.

Dans des modes de réalisation, la liaison est un tissu autoagrippant. Ces modes de réalisation ont l'avantage de permettre d'attacher de façon permanente ou temporaire un corps supplémentaire.

Dans des modes de réalisation, le dispositif objet de la présente invention comporte un support de corps relié à au moins deux moyens d'attache. Ces modes de réalisation permettent au premier corps de ne pas occuper l'intégralité de l'espace entre les deux moyens d'attache.

Dans des modes de réalisation, le dispositif objet de la présente invention est un support de corps extensible. L'avantage de ces modes de réalisation est de permettre d'adapter la longueur du support de corps à la géométrie de la carrosserie à protéger, notamment la longueur des portières.

Dans des modes de réalisation, au moins une partie du support de corps est élastique. Grâce à ces dispositions, la longueur du support de corps est adaptable à la carrosserie sur laquelle le dispositif est placé.

Dans des modes de réalisation, au moins un moyen d'attache secondaire est fixé à un ouvrant du véhicule et inamovible lorsque l'ouvrant du véhicule est fermé.

Ces modes de réalisation ont l'avantage de permettre une fixation plus solide des moyens d'attache. De plus, ces modes de réalisation augmentent les efforts nécessaires pour ôter le dispositif de façon malveillante.

Dans des modes de réalisation, le dispositif objet de la présente invention comporte un moyen de déplacement longitudinal du corps sur le support de corps.

L'avantage de ces modes de réalisation est de permettre un positionnement, par l'utilisateur, du corps sur l'axe créé entre les deux moyens d'attache.

Dans des modes de réalisation, le dispositif objet de la présente invention comporte un deuxième corps rattaché au premier corps par la liaison, comportant au moins un moyen d'attache tertiaire à la carrosserie du véhicule, relié au premier corps par une liaison souple.

Ces modes de réalisation permettent de réduire la longueur du dispositif lorsque le dispositif est plié selon la liaison souple.

Dans des modes de réalisation, au moins un corps comporte de la mousse.

Ces modes de réalisation ont l'avantage d'être produits à bas coûts.

Dans des modes de réalisation, au moins un corps est gonflable.

L'avantage de ces modes de réalisation est qu'ils présentent un faible encombrement lorsqu'au moins un corps est dégonflé.

Dans des modes de réalisation, au moins un moyen d'attache est une ventouse.

Ces modes de réalisation permettent de fixer le dispositif sur tout type de carrosserie.

Dans des modes de réalisation, le dispositif comporte:
- un corps, solidaire de chaque dit moyen d'attache, configuré pour s'étendre sur au moins ladite portière, ledit corps comportant :
   - une partie rigide et
   - une partie gonflable configurée pour pousser la partie rigide lors du gonflement de ladite partie gonflable.

Grâce à ces dispositions, l'utilisateur peut, en actionnant le dispositif lors de l'arrêt du véhicule, protéger la portière de chocs provenant de l'ouverture de portières de véhicules adjacents. Le dispositif objet de ces modes agit comme un amortisseur, et la possibilité de rétracter ce dispositif par dégonflement de la partie gonflable, permet de ne pas nuire à l'esthétique et/ou aux propriétés aérodynamiques du véhicule lorsque celui-ci est en mouvement.

Dans des modes de réalisation, le dispositif de protection objet de la présente invention comporte un compresseur configuré pour gonfler la partie gonflable.

Ces modes de réalisation ont l'avantage de faciliter le gonflage de la partie gonflable car ils demandent un effort minimal à l'utilisateur du dispositif, comme actionner un interrupteur par exemple, pour protéger la carrosserie de son véhicule.

Dans des modes de réalisation, le dispositif de protection est également configuré pour dégonfler la partie gonflable.

Ces modes de réalisation limitent l'effort nécessaire pour dégonfler la partie gonflable.

Dans des modes de réalisation, le dispositif de protection objet de la présente invention comporte un moyen de commande du compresseur configuré pour commander le gonflement de chaque partie gonflable lors de commande de repliement d'au moins un rétroviseur le long d'une portière du véhicule.

L'avantage de ces modes de réalisation est qu'ils permettent à un utilisateur de provoquer le gonflement de la partie gonflable du dispositif dans le même geste que celui pour provoquer le repliement d'au moins un rétroviseur le long d'une portière du véhicule.

Dans des modes de réalisation, la partie rigide est une coque configurée pour couvrir intégralement la partie gonflable lorsque ladite partie gonflable est dégonflée.

Ces modes de réalisation ont l'avantage de permettre une protection améliorée de la partie gonflable. De plus, l'aspect esthétique du dispositif peut être amélioré.

Dans des modes de réalisation, la partie rigide est un couvercle monté en rotation sur un axe situé sur le corps.

L'avantage de ces modes de réalisation est qu'ils permettent une protection améliorée de la partie gonflable par la partie rigide. De plus, la partie rigide, qui rejoint la carrosserie par rotation, n'est pas percutée lors du choc d'une portière d'un autre véhicule ou d'un chariot de supermarché, ce qui évite de l'endommager.

Dans des modes de réalisation, la partie gonflable est en polychlorure de vinyle.

Ces modes de réalisation permettent d'assurer à la partie gonflable une grande résistance ainsi qu'une production à bas coûts.

Dans des modes de réalisation, la partie gonflable comporte un tissu.

L'avantage de ces modes de réalisation est qu'ils permettent d'augmenter la résistance de la partie gonflable à une pression intérieure, augmentant ainsi l'efficacité du dispositif.

Selon un deuxième aspect, la présente invention vise une portière de véhicule, qui comporte un dispositif de protection de la carrosserie du véhicule objet de la présente invention.

Selon un troisième aspect, la présente invention vise un véhicule, qui comporte :
- un dispositif de protection de la carrosserie du véhicule objet de la présente invention monté sur une portière.

Les caractéristiques, buts et avantages de cette portière et de ce véhicule étant similaires à ceux du dispositif objet de la présente invention, ils ne sont pas rappelés ici.

Les caractéristiques principales et secondaires des différents aspects de la présente invention sont destinées à être combinées pour former d'autres modes de réalisation du dispositif et du procédé objets de la présente invention. Les caractéristiques, principales ou secondaires de l'un des aspects de la présente invention constituent donc des caractéristiques secondaires des autres aspects de la présente invention.

### BREVE DESCRIPTION DES FIGURES

D'autres avantages, buts et caractéristiques particulières de l'invention ressortiront de la description non limitative qui suit d'au moins un mode de réalisation particulier du dispositif, de la portière et du véhicule objet de la présente invention, en regard du dessin annexé, dans lequel :
- la figure 1 représente, schématiquement, un mode de réalisation particulier du dispositif amovible de protection de la carrosserie d'un véhicule terrestre objet de la présente invention,
- la figure 2 représente, schématiquement et en coupe selon un axe longitudinal, un premier mode de réalisation particulier du dispositif de protection de la carrosserie d'un véhicule terrestre objet de la présente invention, dans lequel la partie gonflable est dégonflée, la carrosserie du véhicule n'étant pas représentée,
- la figure 3 représente, schématiquement et en coupe selon un axe transversal, un premier mode de réalisation particulier du dispositif de protection de la carrosserie d'un véhicule terrestre objet de la présente invention, dans lequel la partie gonflable est dégonflée,
- la figure 4 représente, schématiquement et en coupe selon un axe transversal, un premier mode de réalisation particulier du dispositif de protection de la carrosserie d'un véhicule terrestre objet de la présente invention, dans lequel la partie gonflable est gonflée,
- la figure 5 représente, schématiquement et en coupe selon un axe transversal, un deuxième mode de réalisation particulier du dispositif de protection de la carrosserie d'un véhicule terrestre objet de la présente invention, dans lequel la partie gonflable est dégonflée et
- la figure 6 représente, schématiquement et en coupe selon un axe transversal, un deuxième mode de réalisation particulier du dispositif de protection de la carrosserie d'un véhicule terrestre objet de la présente invention, dans lequel la partie gonflable est gonflée,
- la figure 7 représente, schématiquement et en coupe selon un axe longitudinal, un premier mode de réalisation particulier du dispositif de protection de la carrosserie d'un véhicule terrestre
- la figure 8 représente, schématiquement, un mode de réalisation particulier du dispositif déployé,
- la figure 9 représente, schématiquement, un mode de réalisation particulier du dispositif replié,
- la figure 10 représente, schématiquement, un mode de réalisation particulier du véhicule,
- la figure 11 représente, schématiquement, un mode de réalisation particulier du véhicule objet de la présente invention,
- la figure 12 représente un logigramme d'étapes particulier du procédé,
- la figure 13 représente, schématiquement et vu de dessus, un mode de réalisation particulier du dispositif,
- la figure 14 représente, schématiquement et vu de côté, un mode de réalisation particulier du dispositif,
- la figure 15 représente, schématiquement et vu de face, un mode de réalisation particulier du dispositif et
- la figure 16 représente, schématiquement et vu de dessus, un mode de réalisation particulier du dispositif.

### DESCRIPTION D'EXEMPLES DE REALISATION DE L'INVENTION

La présente description est donnée à titre non limitatif.

On note, dès à présent, que les figures ne sont pas à l'échelle.

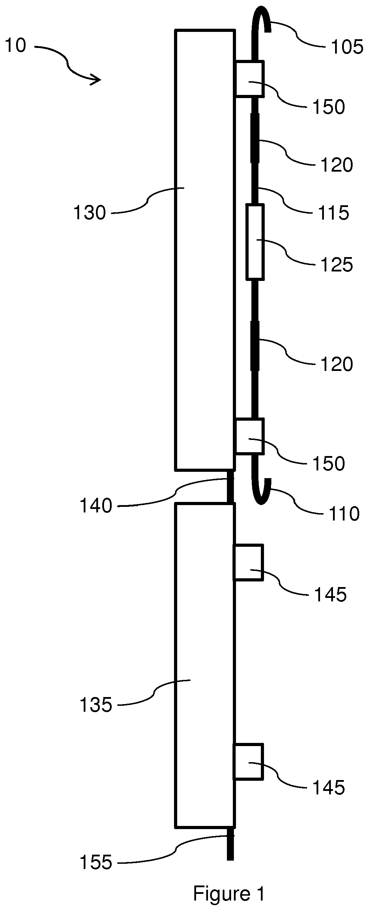

On observe, sur la figure 1, un premier mode de réalisation du dispositif 10 objet de la présente invention. Ce dispositif 10 comporte :
- un moyen d'attache primaire 105,
- un moyen d'attache secondaire 110,
- un support de corps 115 dont deux parties 120 sont élastiques relié au moyen d'attache primaire 105 et au moyen d'attache secondaire 110, qui comporte en outre un moyen d'extension 125 du support de corps 115,
- un premier corps 130 en appui sur le support de corps 115 et
- un deuxième corps 135 relié au premier corps 130 par une liaison souple 140 et comportant deux aimants 145 et une attache 155 pour corps supplémentaire.

Le moyen d'attache primaire 105 est, par exemple, un crochet entourant au moins partiellement une bordure de l'ouvrant, configuré pour être fixé lorsque l'ouvrant du véhicule est ouvert. Ce crochet est, par exemple, positionné sur la bordure d'une portière de voiture lorsque la portière est ouverte. Une fois refermée, la portière et le corps de la voiture bloquent le crochet en position. Ce crochet est, par exemple, de forme ellipsoïde ouverte selon son axe secondaire de manière à être difficilement retirable une fois l'ouvrant fermé. De plus, le support de corps 115 est rigide à l'endroit de la liaison avec le crochet de manière à limiter la capacité d'un tiers à retirer le crochet une fois celui-ci fixé à l'ouvrant fermé.

Le moyen d'attache secondaire 110 est, par exemple, un crochet identique au moyen d'attache primaire 105. Dans des variantes, ce moyen d'attache secondaire 110 est un aimant configuré pour être apposé sur la carrosserie à protéger. Ce moyen d'attache secondaire 110 est positionné sur une bordure de l'ouvrant opposée à celle où le moyen d'attache primaire 105 est fixé. Dans des variantes, ce moyen d'attache secondaire est une ventouse pouvant se fixer sur la carrosserie du véhicule.

Dans des variantes le dispositif 10 comporte une pluralité de moyens d'attache primaire 105 et/ou de moyens d'attache secondaires 110. Grâce à ces dispositions, la difficulté pour ôter de façon malveillante le dispositif 10 est augmentée. De plus, ces dispositions permettent une plus grande variété de positionnement du corps sur une portière, par exemple.

Le support de corps 115 est, par exemple, deux sangles connectées par une jonction de textile autoagrippant (par exemple connue sous la marque déposée VELCRO) reliant le moyen d'attache primaire 105 et le moyen d'attache secondaire 110. Ce support de corps 115 comporte deux parties 120 élastiques réalisé dans un matériau élastique. Dans des variantes, ce support de corps 115 comporte une seule partie 120 élastique. Dans d'autres variantes, ce support de corps 115 comporte une pluralité supérieure à deux de parties 120 élastiques. De plus, ce support de corps 115 comporte un moyen d'extension 125 du support de corps 115. Ce moyen d'extension 115 est, par exemple, une jonction de textile autoagrippant dont chaque bande complémentaire est située sur une sangle dont une est reliée au moyen d'attache primaire 105 et une au moyen d'attache secondaire 110. Ces bandes complémentaires sont longues au regard de la longueur des sangles et permettent de moduler la longueur du support de corps 115 en fonction du placement des bandes complémentaires l'une par rapport à l'autre pour former la jonction de textile autoagrippant.

Le premier corps 130 est, par exemple, un cylindre de révolution en mousse placé dans une housse en tissu. Dans des variantes, ce premier corps 130 est un ballon gonflable par le biais d'une pompe manuelle. Ce premier corps 130 comporte deux moyens de déplacement longitudinal 150 qui sont, par exemple, des boucles en tissu dans lesquelles est glissé le support de corps 115. Une fois que le support de corps 115 a traversé les deux boucles, un utilisateur peut à sa guise déplacer le support de corps 115 le long de l'axe formé par les deux moyens d'attache aux extrémités de ce support de corps 115.

Le deuxième corps 135 est, par exemple, un cylindre de révolution en mousse placé dans une housse en tissu. Dans des variantes, ce deuxième corps 135 est un ballon gonflable par le biais d'une pompe manuelle. Ce deuxième corps 135 comporte deux aimants 145 configurés pour permettre la fixation du deuxième corps 135 à la carrosserie du véhicule à protéger. Dans des variantes, la fixation du deuxième corps est réalisée par l'utilisation de ventouses. Ce deuxième corps 135 est relié au premier corps 130 par une liaison souple 140 qui est, par exemple, un morceau de tissu. Finalement, ce deuxième corps 135 comporte une attache 155 pour corps supplémentaire qui est, par exemple, une des bandes nécessaires pour réaliser jonction en tissu autoagrippant. Le corps à accrocher comportant, dans ce cas, la bande complémentaire à la bande de l'attache 155 pour réaliser la jonction en tissu autoagrippant.

Dans des variantes non représentées, le dispositif 10 comporte un moyen de gonflage de chaque corps gonflable qui est, par exemple, une pompe manuelle.

Dans des variantes non représentées, le dispositif 10 comporte un moyen d'émission d'un signal sonore qui est, par exemple, un flux d'air ou une lame mise en vibration par un passage d'air. Par exemple, cette lame constitue un sifflet. Lors du contact entre un véhicule et un corps ou lors de l'écrasement du corps entre deux véhicules, la compression d'une mousse compressible à l'intérieur du corps provoque un passage d'air et une vibration d'air, créant ainsi un signal sonore qui avertit le conducteur du véhicule en mouvement. Dans des variantes, le moyen d'émission d'un signal sonore est un haut-parleur alimenté par une pile que comporte le dispositif 10. Dans des modes de réalisation, chaque corps comporte un moyen d'émission d'un signal sonore.

Comme on peut le comprendre à la lecture de la description précédente, le principe de fonctionnement du dispositif 10 objet de la présente invention est le suivant :
Lorsque l'utilisateur d'un véhicule souhaite protéger la carrosserie de son véhicule de chocs sur une portière ou un autre élément de carrosserie, l'utilisateur commence par ouvrir la portière à protéger. Par la suite, l'utilisateur fixe le moyen d'attache primaire 105 à une bordure puis le moyen d'attache secondaire 110 à une autre bordure de la portière qui est ensuite refermée. Une fois que la portière est fermée, les moyens d'attaches, 105 et 110, deviennent inamovibles. L'utilisateur positionne ensuite à sa convenance le premier corps 130 le long de l'axe formé par les deux moyens d'attaches, 105 et 110. Puis, l'utilisateur positionne le deuxième corps 135 à sa convenance de manière à protéger la carrosserie de son véhicule. Cette installation ne demande aucun outil.

Lorsque l'utilisateur souhaite ôter le dispositif 10, la portière doit d'abord être ouverte. Ensuite, les moyens d'attaches, 105 et 110, sont ôtés et le deuxième corps 135 retiré.

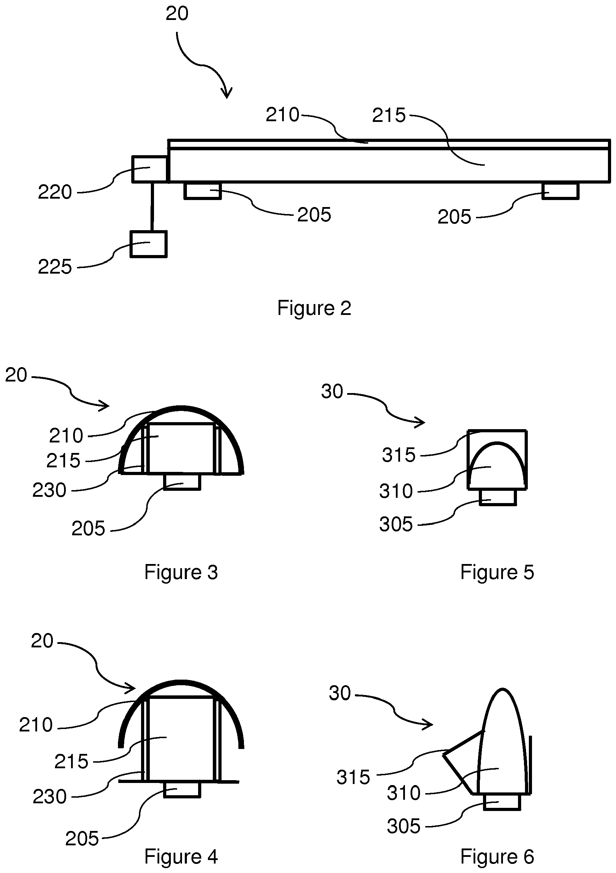

On observe, sur la figure 2, un premier mode de réalisation du dispositif 20 objet de la présente invention. Ce dispositif 20 de protection de la carrosserie d'un véhicule terrestre comporte :
- deux moyens d'attache 205, fixables à une portière du véhicule,
- un corps, solidaire de chaque dit moyen d'attache 205, configuré pour s'étendre sur au moins la portière, ledit corps comportant :
   - une partie rigide 210 et
   - une partie gonflable 215 configurée pour pousser la partie rigide 210 lors du gonflement de ladite partie gonflable 215 ;
- un compresseur 220 et
- un moyen de commande 225 du compresseur 220.

Chaque moyen d'attache 205 peut être permanent ou temporaire. Pour une attache permanente, chaque moyen d'attache 205 peut être fixé à la portière du véhicule selon des techniques connues, telles que le rivetage, le collage ou le vissage. Pour une attache temporaire, chaque moyen d'attache 205 est, par exemple, un aimant configuré pour permettre l'aimantation du corps sur une portière métallique de véhicule. Dans des variantes, au moins un moyen d'attache 205 est un crochet entourant au moins partiellement une bordure de la portière, configuré pour être fixé lorsque la portière du véhicule est ouverte. Ce crochet est, par exemple, positionné sur la bordure d'une portière de voiture lorsque la portière est ouverte. Une fois refermée, la portière et le corps de la voiture bloquent le crochet en position. Ce crochet est, par exemple, de forme ellipsoïde ouverte selon son axe secondaire de manière à être difficilement retirable une fois la portière fermée. De plus, la partie reliant ce crochet au corps est rigide à l'endroit de la liaison avec le crochet de manière à limiter la capacité d'un tiers à retirer le crochet une fois celui-ci fixé à la portière fermée. Dans d'autres variantes, au moins un moyen d'attache 205 est une ventouse.

Le corps est, par exemple, une surface en plastique rigide sur laquelle sont posés les deux moyens d'attache 205. Ce corps comporte une partie gonflable 215 en polychlorure de vinyle couverte par un tissu. Cette partie gonflable 215 comporte une valve à laquelle est fixé un compresseur 220. Ce compresseur 220 gonfle la partie gonflable 215 lorsque le moyen de commande 225 du compresseur 220 détecte une commande de repliement d'au moins un rétroviseur le long d'une portière du véhicule. Cette détection a lieu, par exemple, par connexion mécanique du moyen de commande 225 au rétroviseur, de manière à ce qu'un repliement du rétroviseur entraine la commande de gonflage de la partie gonflable 215. Dans des variantes, le moyen de commande 225 est connecté au système électrique interne du véhicule, de manière à détecter un signal électronique correspondant à une commande de repliement d'au moins un rétroviseur et à provoquer le gonflement de la partie gonflable 215. Par exemple, la commande des moteurs électriques de repliement des rétroviseurs commande simultanément le gonflement de la partie gonflable 215.

Le corps est configuré pour que l'expansion de la partie gonflable 215 ait lieu dans une direction opposée à la portière.

Lorsque le moyen de commande 225 du compresseur 220 commande le gonflement de la partie gonflable 215, le compresseur 220 remplit la partie gonflable 215 d'air. Mécaniquement, à l'issue du gonflement de la partie gonflable 215, la partie rigide 210 est écartée de la portière sur laquelle est fixé le dispositif 20. La partie rigide 210 est, par exemple, une coque en plastique en forme de demi cylindre de révolution configurée pour recouvrir la partie gonflable 215 lorsque la partie gonflable 215 est dégonflée. Lorsque la partie gonflable 215 est dégonflée, la partie ouverte du demi cylindre de révolution est complétée par la surface en plastique qui compose le corps de manière à enfermer la partie gonflable 215.

Lorsque le moyen de commande 225 du compresseur 220 détecte une commande de dépliement d'au moins un rétroviseur du véhicule, ce moyen de commande 225 envoie au compresseur 220 une commande de dégonflage de la partie gonflable 215. Le compresseur 220 aspire alors l'air à l'intérieur de la partie gonflable 215, entrainant mécaniquement le repli de la partie solide 210.

On observe, en figure 3, une deuxième vue, en coupe selon un axe transversal, du premier mode de réalisation du dispositif 20 objet de la présente invention. Ce mode de réalisation est similaire au mode de réalisation du dispositif 20 décrit dans la figure 2. Dans cette deuxième vue du dispositif 20, on observe notamment le tissu 230 couvrant la partie gonflable 215. De plus, on observe dans cette figure 2, la partie gonflable 215 dégonflée et, par conséquent, la partie rigide 210 faisant la jonction avec la surface en plastique du corps tel que décrit en figure 2.

On observe, en figure 4, une troisième vue, en coupe selon un axe transversal, du premier mode de réalisation du dispositif 20 objet de la présente invention. Ce mode de réalisation est similaire au mode de réalisation du dispositif 20 décrit dans la figure 2. Dans cette figure 4, la partie gonflable 215 est gonflée et, par conséquent, la partie rigide 210 déployée à distance du corps. On observe notamment que le tissu 230 est étiré par le gonflement de la partie gonflable 215.

On observe, en figure 5, schématiquement et en coupe selon un axe transversal, un deuxième mode de réalisation particulier du dispositif 30 objet de la présente invention. Ce dispositif 30 est similaire au dispositif 20 décrit en figure 2, à l'exception que le corps est une boite dont l'une des parois est un couvercle 315 monté en rotation fixé à un axe situé sur le corps. La partie gonflable 310 est située a l'intérieur de cette boite et, lors de l'expansion de la partie gonflable 310, le couvercle 315 est repoussé pour laisser sortir la partie gonflable 310. Ce couvercle 315 se referme automatiquement grâce à un ressort, son poids ou son matériau élastique, par exemple. Dans la figure 5, la partie gonflable 310 est dégonflée.

On observe, en figure 6, une deuxième vue, en coupe et selon un axe transversal, du deuxième mode de réalisation particulier du dispositif 30 objet de la présente invention. Ce mode de réalisation est similaire au mode de réalisation du dispositif 30 décrit dans la figure 5. Dans cette figure 6, la partie gonflable 310 est gonflée et le couvercle 315 est ouvert.

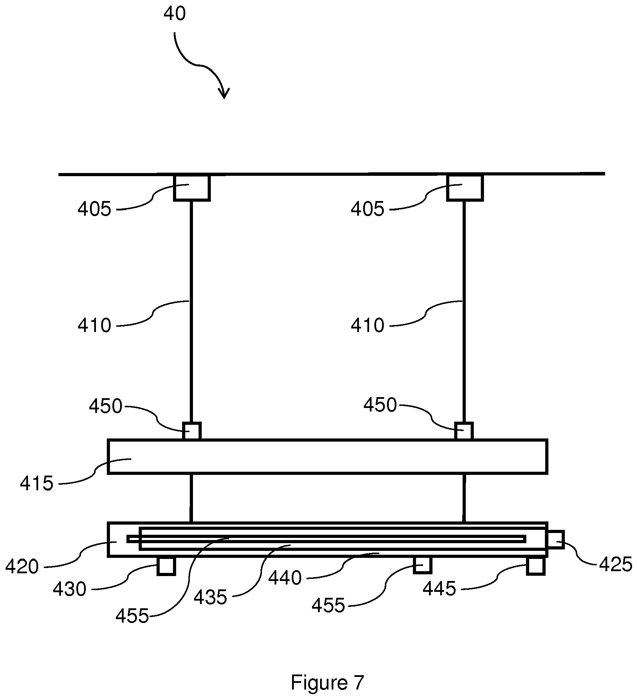

On observe, sur la figure 7, un mode de réalisation du dispositif 40. Ce dispositif 40 de protection de la carrosserie d'un véhicule comporte :
- deux moyens de suspension 410 d'un corps dont chacun desdits moyens de suspension 410 comporte un moyen de fixation 405 à un plafond d'un local dont chaque moyen de suspension 410 comporte un moyen de réglage 450 de la hauteur desdits corps d'absorption, 415 et 420, de chocs,
- un moyen de repliement 455 desdits moyens de suspension 410 et
- deux corps, 415 et 420, d'absorption de chocs soutenu par chaque dit moyen de suspension 410 d'un corps dont au moins un corps 420 comporte :
   - un dispositif rétroréfléchissant 430 ;
   - un moyen d'émission d'un signal sonore 425 ;
   - une paroi étanche 440 et renfermant une matière compressible 435 et
   - un moyen d'émission d'un signal lumineux 445.

Chaque moyen de suspension 410 d'un corps est, par exemple, une sangle traversant chaque corps d'absorption, 415 et 420. Dans des variantes, au moins un moyen de suspension 410 d'un corps est rigide. Dans d'autres variantes, au moins un moyen de suspension 410 d'un corps est rigide et comporte plusieurs points d'attache sur un corps 415. Dans des variantes, chaque moyen de suspension 410 est extensible.

Chaque moyen de fixation 405 est, par exemple, un socle vissé au plafond du local dans lequel est placé le dispositif 40. Ce socle comporte un moyen t'attache pour un moyen de suspension 410.

Chaque moyen de réglage 450 de la hauteur est, par exemple, une pince attachée au corps d'absorption 415 et configurée pour pincer la sangle lorsque la pince est fermée. Un utilisateur souhaitant ajuster la hauteur du corps 415 ouvre la pince, ajuste la hauteur du corps 415 et referme la pince pour fixer le corps 415 à la hauteur désirée. Dans des variantes, au moins un moyen de suspension 410 est rigide et indenté, et le moyen 450 de réglage de la hauteur sur ce moyen de suspension 410 est une tige configurée pour nécessiter une pression pour être écartée du moyen de suspension. Dans des variantes, le moyen de réglage 450 de la hauteur est une bobine contenue dans un moyen de fixation 405 enroulée afin de faire monter chaque corps d'absorption, 415 et 420, et déroulée pour faire descendre lesdits corps d'absorption, 415 et 420.

Le moyen de repliement 455 est, par exemple, un tissu autoagrippant dont une partie est fixée sur le plafond du local et l'autre partie est fixée sur le corps d'absorption 420. Dans des variantes, le moyen 455 de repliement est une paire d'aimants dont un des aimants est fixé à un corps d'absorption 420 et dont l'autre aimant est fixé au plafond, par exemple. Dans des variantes, le moyen 455 de repliement est porté par un moyen de suspension 410 d'un corps. Par exemple, deux parties d'un tissu autoagrippant sont positionnées à deux hauteurs différentes et du même côté de chaque sangle.

Le corps d'absorption 420 comporte un dispositif rétroréfléchissant 430, comme par exemple une surface comportant des catadioptres. Dans des variantes, chaque corps d'absorption, 415 et 420, comporte un dispositif rétroréfléchissant 430.

Chaque corps d'absorption, 415 et 420, est une mousse compressible 435 enveloppée par une paroi 440, la dite paroi 440 étanche étant obturée par la lame mise en vibration par un passage d'air. Dans des variantes, au moins un corps d'absorption, 415 et 420, est une poche gonflable.

De plus, le corps d'absorption 420 comporte un moyen d'émission d'un signal sonore 425 qui est, par exemple, un flux d'air ou une lame mise en vibration par un passage d'air. Par exemple, cette lame constitue un sifflet. Lors du contact entre un véhicule et le corps d'absorption 420 ou lors de l'écrasement du corps d'absorption entre deux véhicules, la compression de la mousse compressible 435 provoque un passage d'air et une vibration d'air, créant ainsi un signal sonore qui avertit le conducteur du véhicule en mouvement. Dans des variantes, le moyen d'émission d'un signal sonore 425 est un haut-parleur alimenté par une pile que comporte le dispositif 40. Dans des modes de réalisation, chaque corps d'absorption, 415 et 420, comporte un moyen d'émission d'un signal sonore 425.

De plus, le corps d'absorption 420 comporte un moyen d'émission d'un signal lumineux 445 qui est, par exemple, une diode électroluminescente alimentée par une pile. Un détecteur de choc, par exemple une bille formant contact sous l'impact, déclenche l'émission de signaux lumineux, par exemple d'une diode suralimentée pendant les instants d'émission pour que le courant moyen reste nominal alors que la puissance lumineuse est très élevée (jusqu'à un facteur de 10) pendant les périodes d'émission.

Le dispositif comporte, de plus, un capteur 455 d'une force exercée sur un corps d'absorption 420 et un déclencheur du moyen d'émission 425 du signal sonore en fonction d'une force captée. Le déclencheur est, par exemple, un circuit électronique configuré pour commander l'émission d'un signal sonore au moyen d'émission 425 lorsque le moyen d'émission 425 est électronique.

Dans des modes de réalisation, chaque corps d'absorption, 415 et 420, comporte un moyen d'émission d'un signal lumineux 445.

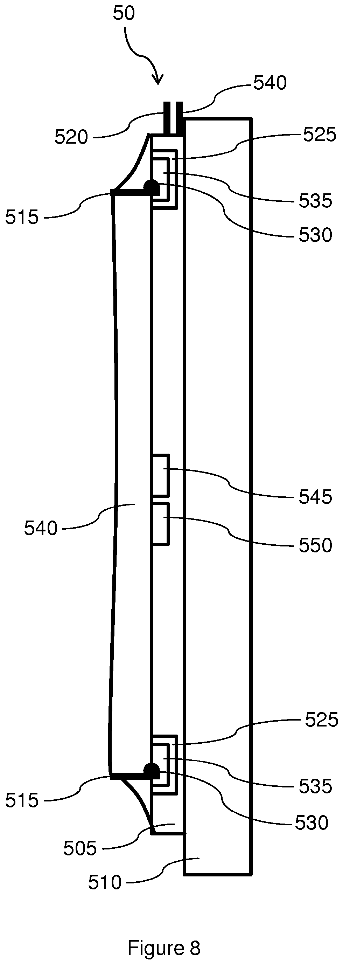

On observe, sur la figure 8, schématiquement et en coupe, vu de dessus, un mode de réalisation particulier du dispositif 50. Ce dispositif 50 comporte :
- un moyen 505 d'attache fixé à un élément 510 de carrosserie du véhicule,
- un amortisseur 515 d'impact d'un objet sur la carrosserie dans un corps 540 élastique,
- un moyen 520 de réception d'une commande de déploiement ou de repliement de l'amortisseur 515,
- un moyen 525 de déploiement/repliement de l'amortisseur 515 configuré pour déployer ou replier l'amortisseur 515, en fonction de la réception d'une commande de déploiement ou de repliement, comportant :
   - au moins une liaison pivot 530 configurée pour déplacer en rotation l'amortisseur 515 depuis une position de repli vers une position de déploiement ou depuis une position de déploiement vers une position de repli et
   - au moins un moyen 535 de mise en rotation d'au moins une liaison pivot 530 actionné en fonction de la réception d'une commande de déploiement ou de repliement et
- un capteur 550 de force appliquée sur l'amortisseur 515 et
- un moyen 545 de transmission d'un signal, représentatif de la détection d'un impact sur la carrosserie, en fonction d'une force exercée sur l'amortisseur 515.

Le moyen d'attache 505 est, par exemple, un corps de support comportant des trous taraudés permettant le vissage de visses fixant ce corps de support à l'élément de carrosserie 510 du véhicule. Dans des variantes, ce moyen d'attache 505 est un corps de support collé à l'élément de carrosserie 510. Dans d'autres variantes, ce moyen d'attache 505 est un corps de support embarqué mécaniquement dans l'élément de carrosserie 510. Dans d'autres variantes, le dispositif 50 comporte une pluralité de moyens d'attache 505 qui est réalisée par une combinaison de moyens d'attache 505 décrits ci-dessus ou par d'autres réalisations de fixation connues de l'homme du métier.

L'amortisseur 515 d'impact est, par exemple, un ressort monté sur une liaison pivot 530. Dans des variantes, l'amortisseur 515 est de type :
- hydraulique télescopique,
- hydropneumatique,
- hydraulique à palettes,
- hydraulique à levier,
- pneumatique ou
- à inertie.

Ces variantes, plus ou moins efficaces en amortissement d'un choc, font également varier le coût de fabrication du dispositif 50. Ainsi, selon l'application de ce dispositif 50, la nature de l'amortisseur 515 peut être adaptée de manière à répondre de façon optimale aux contraintes de qualité de l'amortissement et de coût de fabrication.

Cet amortisseur 515 est positionné dans un corps élastique 540 tendu lorsque l'amortisseur 515 est déployé. Ce corps élastique 540 est, par exemple, une poche en caoutchouc configurée pour absorber l'énergie d'un impact avec un objet. Ce corps élastique 540 agit en combinaison avec l'amortisseur 515 dans la protection de la carrosserie du véhicule contre des impacts.

Le moyen de réception 520 d'une commande de déploiement ou de repliement de l'amortisseur est, par exemple, un câble électrique connecté à un ordinateur de bord du véhicule. Dans des variantes, ce câble électrique est connecté à un élément du véhicule, comme par exemple un rétroviseur, émettant une commande de déploiement ou de repliement en fonction d'un traitement réalisé à cet élément du véhicule.

Le moyen de déploiement/repliement 525 de l'amortisseur 515 est, par exemple, un ensemble de pièces mécaniques comportant :
- au moins une liaison pivot 530 configurée pour déplacer en rotation l'amortisseur 515 depuis une position de repli vers une position de déploiement ou depuis une position de déploiement vers une position de repli et
- au moins un moyen 535 de mise en rotation d'au moins une liaison pivot 530 actionné en fonction de la réception d'une commande de déploiement ou de repliement.

Le moyen de mise en rotation 535 d'au moins une liaison pivot 530 est, par exemple, un moteur alimenté par une batterie ou une source d'alimentation électrique du véhicule. Lorsque le moyen de déploiement/repliement 525 reçoit une commande de déploiement de l'amortisseur 515, le moyen de mise en rotation 535 est actionné de manière à déployer l'amortisseur 515. Inversement, lorsque le moyen de déploiement/repliement 525 reçoit une commande de repliement de l'amortisseur 515, le moyen de mise en rotation 535 est actionné de manière à replier l'amortisseur 515 le long de l'élément de carrosserie 510.

Dans des variantes, une pluralité de liaisons pivot 530 sont mises en rotation par un seul moyen de mise en rotation 535.

Le capteur 550 de force mesure, par exemple, une force de compression de l'amortisseur 515 par le biais d'un cristal piézoélectrique.

Le moyen de transmission 545 d'un signal est, par exemple, un câble électrique connecté à un ordinateur de bord du véhicule. Dans des variantes, ce câble est directement connecté à au moins un phare et/ou un avertisseur sonore (connu sous le nom de « klaxon », marque déposée) du véhicule. Lorsqu'une pression exercée sur l'amortisseur 515, par un objet au contact, est supérieure à une valeur limite prédéterminée, le moyen de transmission 545 transmet un signal représentatif de la détection d'un impact. Dans des variantes, le signal transmis dépend de la pression détectée et permet, en fonction de cette pression, de réaliser une pluralité de traitements. Par exemple, si la pression détectée est inférieure à une première valeur limite prédéterminée, l'avertisseur sonore du véhicule émet un son. Si, en revanche, la pression détectée est supérieure à la première valeur limite prédéterminée, l'avertisseur sonore du véhicule émet un son et les phares clignotent de manière à avertir un utilisateur responsable de l'impact.

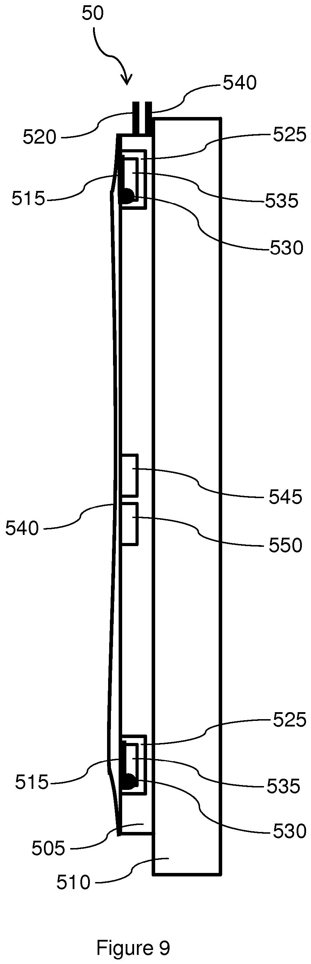

On observe, sur la figure 9, schématiquement et en coupe, vu de dessus, un mode de réalisation particulier du dispositif 50. Dans cette figure 9, les amortisseurs 515 sont en positions de repli selon un axe longitudinal du dispositif 50. Un amortisseur 515 est positionné en positions de repli lorsque aucune commande d'ouverture, ou de déploiement, n'a été reçue par la liaison pivot 530 associée à l'amortisseur 515.

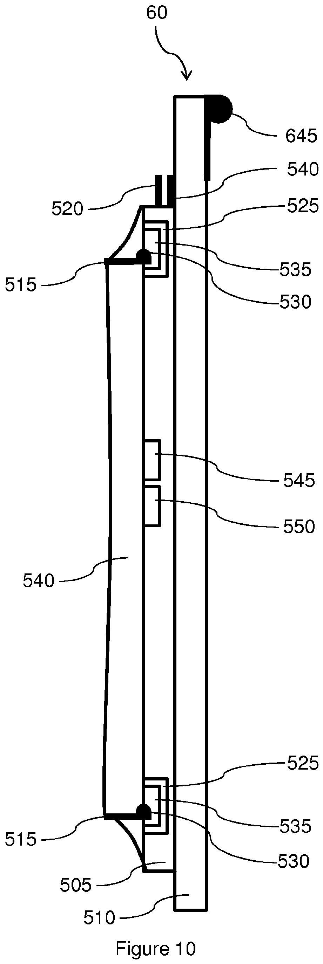

On observe, sur la figure 10, schématiquement et en coupe, vu de dessus, un mode de réalisation particulier de l'ouvrant 60. Cet ouvrant 60 comporte l'ensemble des moyens, 505, 510, 515, 520, 525, 530, 535 et 540, décrits en figure 8. L'élément de carrosserie 505 est, dans cette figure 6, une portière ou une porte d'un coffre par exemple. Cet élément de carrosserie 505 comporte, en particulier, une charnière 645 permettant l'ouverture et la fermeture de l'ouvrant 60. L'ouverture et la fermeture de cet ouvrant 60 peuvent être réalisées manuellement ou automatiquement.

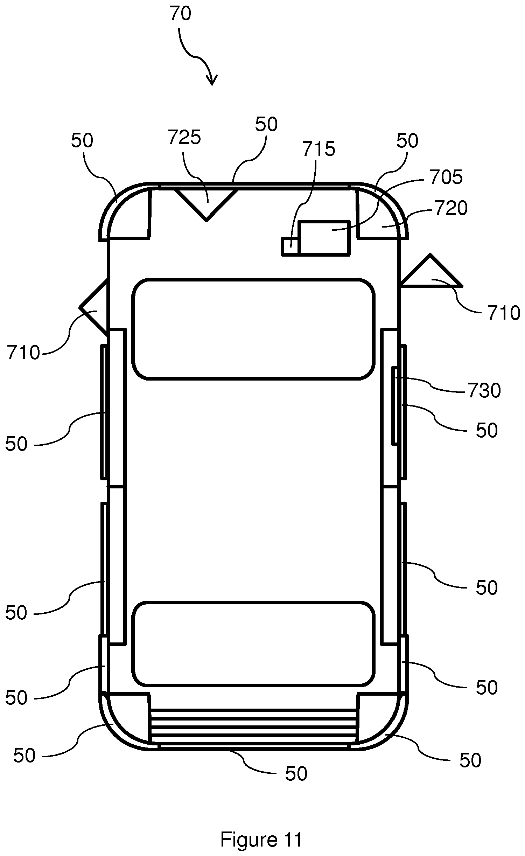

On observe, sur la figure 11, schématiquement et en coupe, vu de dessus, un mode de réalisation particulier du véhicule 70 objet de la présente invention. Ce véhicule 70 comporte :
- au moins un dispositif 50 de protection de la carrosserie du véhicule tel que décrit en figure 8,
- un moyen 705 d'émission d'une commande de déploiement ou de repliement d'un amortisseur d'impact du dispositif 50 configuré pour :
   - émettre une commande de déploiement lorsqu'au moins un rétroviseur 710 du véhicule est replié et
   - émettre une commande de repliement lorsqu'au moins un rétroviseur 710 du véhicule est déployé ;
- un moyen 715 de verrouillage de la commande émise et
- au moins un moyen, 720 et 725, d'émission d'un signal sonore et/ou visuel configuré pour émettre un signal sonore et/ou visuel lorsqu'un impact est détecté.

Le véhicule 70 est, par exemple, une voiture. Dans des variantes, ce véhicule 70 est un véhicule quelconque de type terrestre, maritime ou aérien.

Ce véhicule 70 est protégé par douze dispositifs 50 de protection tels que décrits dans la figure 8. Ces dispositifs 50 sont positionnés :
- sur des portières pour quatre de ces dispositifs 50,
- le long du véhicule, entre les portières arrière et une porte du coffre, pour quatre de ces dispositifs 50,
- sur la porte du coffre pour l'un de ces dispositifs 50 et
- sur le pare-choc avant du véhicule 70.

Dans des variantes, le véhicule 70 est protégé par un nombre quelconque de dispositifs 50 positionnés sur des quelconques parties de la carrosserie du véhicule 70.

Chaque dispositif 50 est connecté au moyen d'émission 705 d'une commande de déploiement ou de repliement. Ce moyen d'émission 705 est, par exemple, un circuit électronique configuré pour générer et émettre une commande de déploiement lorsqu'au moins un rétroviseur 710 est replié. Ce circuit électronique est également, par exemple, configuré pour générer et émettre une commande de repliement lorsqu'au moins un rétroviseur 710 est déployé.

L'émission de cette commande de déploiement ou de repliement peut être verrouillée par l'actionnement du moyen de verrouillage 715. Ce moyen de verrouillage 715 est, par exemple, un circuit électronique configuré pour empêcher le moyen d'émission 705 d'émettre une nouvelle commande tant que le moyen de verrouillage 715 est actionné. Ce moyen de verrouillage 715 est actionné, par exemple, lors du verrouillage des ouvrants du véhicule ou lors de la réception d'une commande de verrouillage, transmise par un terminal portable communicant associé au véhicule 70.

Le véhicule 70 comporte, de plus, un moyen d'émission 720 d'un signal visuel configuré pour être actionné lorsqu'au moins un dispositif 50 transmet un signal représentatif d'une pression exercée sur un amortisseur du dispositif 50. Ce moyen d'émission 720 est, par exemple, un phare configuré pour clignoter lorsqu'une pression détectée sur un amortisseur est supérieure à une valeur limite prédéterminée.

Le véhicule 70 comporte, de plus, un moyen d'émission 725 d'un signal sonore configuré pour être actionné lorsqu'au moins un dispositif 50 transmet un signal représentatif d'une pression exercée sur un amortisseur du dispositif 50. Ce moyen d'émission 725 est, par exemple, un avertisseur sonore configuré pour émettre un son lorsqu'une pression détectée sur un amortisseur est supérieure à une valeur limite prédéterminée.

Le véhicule 70 comporte, de plus, un capteur 730 de force exercée sur l'amortisseur et un moyen 720 d'émission d'un signal sonore et/ou visuel configuré pour émettre un signal sonore et/ou visuel lorsqu'une force exercée sur le capteur de force est supérieure à une valeur limite prédéterminée.

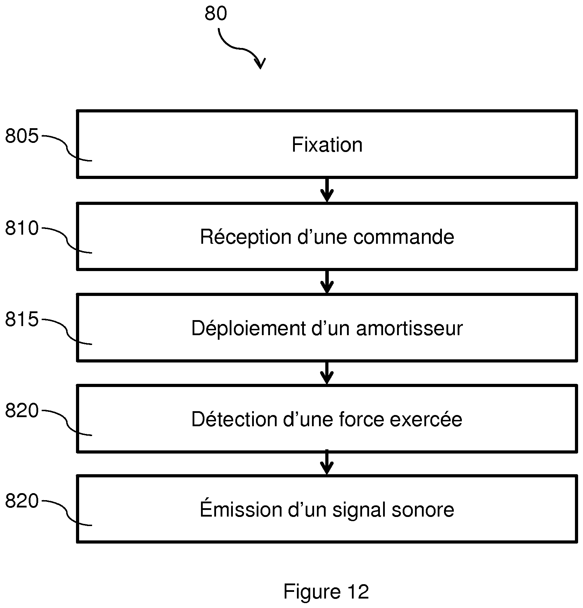

On observe, sur la figure 12, un logigramme d'étape particulier du procédé 80. Ce procédé 80 comporte :
- une étape 805 de fixation d'une protection de carrosserie comportant un amortisseur d'impact d'objet avec la carrosserie,
- une étape 810 de réception d'une commande de déploiement de l'amortisseur,
- une étape 815 de déploiement/repliement de l'amortisseur en fonction de la réception d'une commande de déploiement ou de repliement,
- une étape 820 de détection d'une force exercée sur l'amortisseur et
- une étape 825 d'émission d'un signal sonore en fonction d'une force exercée sur l'amortisseur.

L'étape de fixation 805 est réalisée, par exemple, par vissage d'un dispositif 10 de protection de carrosserie, tel que décrit en figure 5, sur un élément de carrosserie d'un véhicule.

L'étape de réception 810 d'une commande de déploiement de l'amortisseur est réalisée, par exemple, par la mise en oeuvre d'un câble connectant le dispositif 10 à un ordinateur de bord du véhicule.

L'étape de déploiement 815 est réalisée, par exemple, par la mise en oeuvre d'un moteur réalisant une mise en rotation d'une liaison pivot sur laquelle l'amortisseur est monté.

L'étape de détection d'une force 820 est réalisée, par exemple, par un capteur de force du associé à l'amortisseur.

L'étape d'émission 825 est réalisée, par exemple, par la mise en oeuvre d'un câble électrique connectant le dispositif 50 et un avertisseur sonore du véhicule. Lorsque la pression exercée par l'objet sur l'amortisseur est supérieure à une valeur limite prédéterminée, le dispositif 50 émet un signal représentatif d'un impact. Ce signal est transmis à l'avertisseur sonore qui, à son tour, émet un signal sonore afin d'avertir les utilisateurs à proximité de la collision ayant lieu.

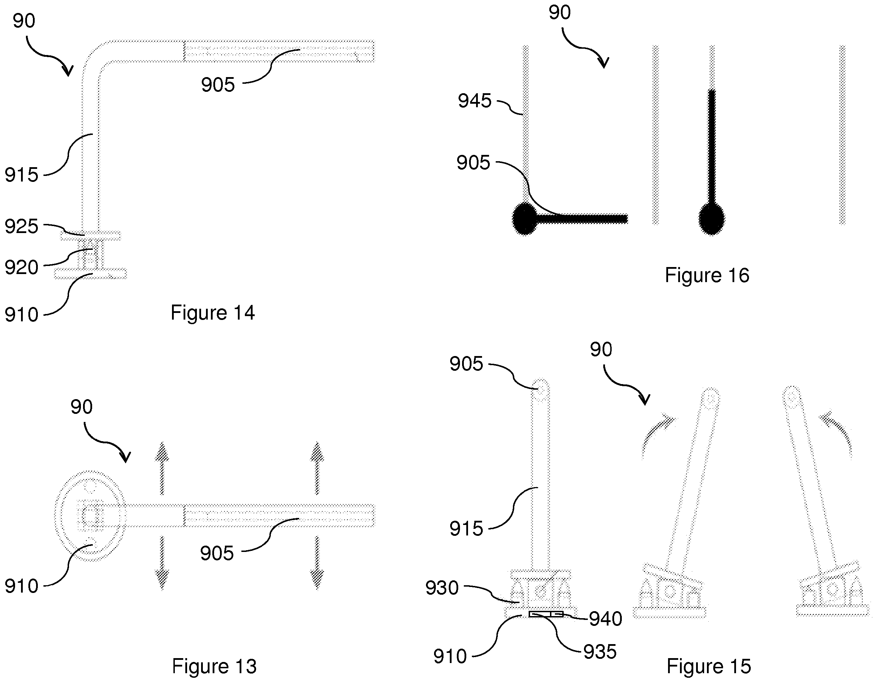

On observe, sur les figures 13 à 15, un mode de réalisation particulier du dispositif 90.

Ce dispositif 90 de protection de la carrosserie d'un véhicule comporte :
- un corps 905 d'absorption de chocs sur la carrosserie du véhicule déporté d'un moyen 910 de fixation du dispositif 90 au sol par un bras 915, ce corps 905 d'absorption étant grossièrement parallèle au sol,
- un moyen 920 de déplacement en rotation d'au moins une partie du bras 915 selon un axe grossièrement parallèle à un axe formé par le corps 905 d'absorption qui comporte une base 925, fixée au bras 915, montée en rotation sur le moyen 910 de fixation du dispositif 90 au sol,
- de part et d'autre de la base 925 par rapport au sens de rotation du moyen 920 de déplacement, des moyens 930 de maintien en position de la base repoussant la base 925 lors d'une rotation de la base 925,
- un moyen 935 de déplacement en rotation secondaire configuré pour déplacer le moyen 910 de fixation autour d'un axe formé par le bras 915, ce bras 915 étant grossièrement perpendiculaire au sol et
- un moyen 940 de verrouillage du positionnement du moyen 935 de déplacement secondaire.

Le corps d'absorption 905 est, par exemple, un tube en mousse gainé monté sur un bras 915 en matière synthétique ou métallique rigide. Dans des variantes, ce corps d'absorption 905 est un tube gonflé.

Le moyen de fixation 910 est, par exemple, une structure, dite « platine », élargie en métal ou en matière synthétique vissée dans le sol. Cette structure comporte, dans des variantes, un revêtement étanche ou souple.

Le bras 915 est grossièrement perpendiculaire au sol et au plan général formé par la structure du moyen de fixation 910. Le bras 915 est fixé à la base 925 par soudage, par exemple.

La base 925 est montée en rotation sur le moyen de déplacement 920 par le biais, par exemple, d'une charnière. Dans des variantes, la base 925 comporte deux butées cylindriques associées à des cavités cylindriques du moyen de déplacement, ces cavités étant positionnées selon un axe grossièrement parallèle au sol.

Lors d'un choc que le corps d'absorption 905, l'ensemble formé par la base 925, le bras 915 et le corps d'absorption 905 est déplacé en rotation.

Les moyens de maintien 930 en position de la base repoussant la base 925 lors d'une rotation de la base 925 sont, par exemple, des ressorts repoussant la base lors d'une rotation de la base ou des vérins repoussant la base lors d'une rotation de la base.

Le moyen 935 de déplacement en rotation secondaire configuré pour déplacer le moyen 910 de fixation autour d'un axe formé par le bras 915 est, par exemple, un arbre associé, d'une part, à la platine, et d'autre part à un ensemble formé par un support de base 925 et les moyens de maintien 930. Cet arbre est grossièrement perpendiculaire à la platine et au sol et la course de cet arbre est préférentiellement limitée à un quart de cercle. De cette manière, le corps d'absorption 905 peut être placé dans deux positions :
- une position, dite « de blocage », lorsque le corps d'absorption 905 entrave l'accès à une place de parking et
- une position, dite « de protection », lorsque le corps d'absorption 905 est positionné le long de la place de parking.

Dans des variantes, le moyen de déplacement 935 en rotation secondaire est configuré pour déplacer la base 925. Dans ces variantes, la base 925 est configurée pour, lorsque le corps d'absorption 905 est en position de blocage, ne pas être en contact des moyens de maintien 930 et pour ne pas pouvoir être déplacée en rotation.

Le moyen de déplacement 935 secondaire peut être actionné manuelle ou par un automatisme commandé par une télécommande d'un utilisateur.

Le moyen de verrouillage 940 du positionnement du moyen 935 de déplacement secondaire est, par exemple, une cale insérée manuellement ou automatiquement dans une cavité d'une partie mobile du moyen de fixation 910, ou de la base 925, et dans une partie immobile du moyen de fixation 910.

On observe, en particulier, sur la figure 15, trois dispositifs 90 dont :
- le premier est en position de repos, c'est à dire dans lequel le corps d'absorption 905 n'est pas déplacé en rotation,
- le deuxième est en déplacement en rotation selon un premier sens de rotation et
- le troisième est en déplacement en rotation selon un deuxième sens de rotation opposé au premier sens de rotation.

On observe, sur la figure 16, vus de dessus, deux dispositifs 90 tels que décrits en regard des figures 13 à 15. Un de ces dispositifs 90 est en position de blocage, c'est à dire que le corps d'absorption 905 est positionné à une extrémité d'une place de parking, perpendiculairement à une ligne de démarcation 945 de la place de parking. L'autre de ces dispositifs 90 est en position de protection, c'est à dire que le corps d'absorption 905 est positionné parallèlement à et au dessus d'une ligne de démarcation 945 de la place de parking.

## Revendications

1. Dispositif (10) amovible de protection de la carrosserie d'un véhicule terrestre comportant un corps de véhicule et au moins une portière, définissant un espace entre le corps de véhicule et chaque bordure sensiblement verticale de chaque portière fermée du véhicule, **caractérisé en ce qu'**il comporte :
- une attache primaire (105), configurée pour être fixée à une première bordure sensiblement verticale d'une portière du véhicule, en forme de crochet configuré pour ne pas pouvoir passer dans ledit espace et être donc inamovible lorsque la portière du véhicule est fermée,
- une attache secondaire (110) configurée pour être fixée à une deuxième bordure sensiblement verticale de la portière du véhicule, ladite deuxième bordure étant opposée à ladite première bordure,
- un premier corps (130) configuré pour s'étendre horizontalement sur au moins une portière entre les deux attaches, chacune desdites attaches étant configurée pour être amovible sans outil lorsque ladite portière est ouverte et
- au moins une liaison, fixe ou amovible (140) pour un corps supplémentaire.

2. Dispositif (10) selon la revendication 1, qui comporte un moyen d'émission d'un signal sonore et un déclencheur du moyen d'émission du signal sonore lorsque le dispositif est touché par un autre véhicule ou écrasé entre deux véhicules.

3. Dispositif (10) selon l'une des revendications 1 ou 2, dans lequel au moins une attache primaire est un crochet (105, 110), entourant au moins partiellement une bordure de la portière, configuré pour être fixé lorsque la portière du véhicule est ouverte.

4. Dispositif (10) selon l'une des revendications 1 à 3, dans lequel la liaison (140) est un tissu autoagrippant.

5. Dispositif (10) selon l'une des revendications 1 à 4, dans lequel au moins une attache secondaire est un aimant fixé sur la carrosserie du véhicule.

6. Dispositif (10) selon la revendication 1 à 5, qui comporte un support de corps extensible.

7. Dispositif (10) selon la revendication 6, dans lequel au moins une partie du support de corps est élastique.

8. Dispositif (10) selon l'une des revendications 6 ou 7, qui comporte un moyen de déplacement longitudinal (150) du corps sur le support de corps.

9. Dispositif (10) selon l'une des revendications 1 à 8, qui comporte un deuxième corps (135) rattaché au premier corps par la liaison (140), comportant au moins une attache tertiaire (145) à la carrosserie du véhicule, reliée au premier corps par une liaison souple (140).

10. Dispositif (10) selon la revendication 9, dans lequel au moins une attache est une ventouse.

11. Dispositif (20, 30) selon l'une des revendications 1 à 10, **caractérisé en ce qu'**il comporte :
- un corps, solidaire de chaque dite attache, configurée pour s'étendre sur au moins la portière, ledit corps comportant :
- une partie rigide (210, 315) et
- une partie (215, 310) pour pousser la partie rigide.

12. Dispositif (20, 30) selon la revendication 11, qui comporte un moyen de commande (225) de la partie (215, 310) pour pousser la partie rigide lors de commande de repliement d'au moins un rétroviseur le long d'une portière du véhicule.

13. Portière (60) de véhicule, **caractérisée en ce qu'**elle comporte un dispositif (10, 20, 30) de protection de la carrosserie du véhicule selon l'une des revendications 1 à 12.

14. Véhicule comportant au moins un dispositif de protection selon l'une des revendications 1 à 12 monté sur une portière.

## Patentansprüche

1. Abnehmbare Schutzvorrichtung (10) der Karosserie eines Landfahrzeugs, einen Fahrzeugkorpus und mindestens eine Tür umfassend, die einen Raum zwischen dem Fahrzeugkorpus und jeder im Wesentlichen vertikalen Umrandung jeder geschlossenen Tür des Fahrzeugs definiert, **dadurch gekennzeichnet, dass** sie umfasst:
- Eine primäre Klammer (105), die konfiguriert ist, um an einer ersten im Wesentlichen vertikalen Umrandung einer Tür des Fahrzeugs befestigt zu werden, in Form eines Hakens, der konfiguriert ist, um nicht in den Raum gelangen zu können und somit nicht abnehmbar zu sein, wenn die Tür des Fahrzeugs geschlossen ist,
- Eine sekundäre Klammer (110), die konfiguriert ist, um an einer zweiten im Wesentlichen vertikalen Umrandung einer Tür des Fahrzeugs befestigt zu werden, wobei die zweite Umrandung gegenüber der ersten Umrandung liegt,
- Einen ersten Korpus (130), der konfiguriert ist, um sich horizontal über mindestens eine Tür zwischen den beiden Klammern zu erstrecken, wobei jede der Klammern konfiguriert ist, um ohne Werkzeug abnehmbar zu sein, wenn die Tür offen ist und
- Mindestens eine feste oder abnehmbare Anbindung (140) für einen zusätzlichen Korpus.

2. Vorrichtung (10) nach Anspruch 1, die ein Mittel zum Aussenden eines akustischen Signals und einen Auslöser des Mittels zum Aussenden eines akustischen Signals umfasst, wenn die Vorrichtung durch ein anderes Fahrzeug berührt, oder zwischen zwei Fahrzeugen zerquetscht wird.

3. Vorrichtung (10) nach einem der Ansprüche 1 oder 2, wobei mindestens eine primäre Klammer ein Haken (105, 110) ist, der mindestens teilweise eine Umrandung der Tür umgibt, konfiguriert, um befestigt zu sein, wenn die Tür des Fahrzeugs offen ist.

4. Vorrichtung (10) nach einem der Ansprüche 1 bis 3, wobei die Anbindung (140) ein Klettgewebe ist.

5. Vorrichtung (10) nach einem der Ansprüche 1 bis 4, wobei mindestens eine sekundäre Klammer ein Magnet ist, der an der Karosserie des Fahrzeugs befestigt ist.

6. Vorrichtung (10) nach Anspruch 1 bis 5, die eine erweiterbare Korpushalterung umfasst.

7. Vorrichtung (10) nach Anspruch 6, wobei mindestens ein Abschnitt der Korpushalterung elastisch ist.

8. Vorrichtung (10) nach einem der Ansprüche 6 oder 7, die ein Mittel zur Längsverschiebung (150) des Korpus auf der Korpushalterung umfasst.

9. Vorrichtung (10) nach einem der Ansprüche 1 bis 8, die einen zweiten Korpus (135) umfasst, der durch die Anbindung (140) mit dem ersten Korpus verbunden ist, mindestens eine tertiäre Klammer (145) an der Karosserie des Fahrzeugs umfassend, die durch eine flexible Anbindung (140) mit dem ersten Korpus verbunden ist.

10. Vorrichtung (10) nach Anspruch 9, wobei mindestens eine Klammer ein Saugnapf ist.

11. Vorrichtung (20, 30) nach einem der Ansprüche 1 bis 10, **dadurch gekennzeichnet, dass** sie umfasst:
- Einen Korpus, der fest mit jeder Klammer verbunden ist, konfiguriert, um sich mindestens über die Tür zu erstrecken, wobei der Korpus umfasst:
- Einen starren Abschnitt (210, 315) und
- Einen Abschnitt (215, 310) zum Schieben des starren Abschnitts.

12. Vorrichtung (20, 30) nach Anspruch 11, die ein Mittel zum Steuern (225) des Abschnitts (215, 310) umfasst, um den starren Abschnitt beim Steuern des Einklappens mindestens eines Rückspiegels entlang einer Tür des Fahrzeugs zu schieben.

13. Fahrzeugtür (60), **dadurch gekennzeichnet, dass** sie eine Schutzvorrichtung (10, 20, 30) der Karosserie des Fahrzeugs nach einem der Ansprüche 1 bis 12 umfasst.

14. Fahrzeug, umfassend mindestens eine Schutzvorrichtung nach einem der Ansprüche 1 bis 12, die auf der Tür montiert ist.

## Claims

1. Removable device (10) for protecting the bodywork of a land vehicle comprising a vehicle body and at least one door, defining a space between the vehicle body and each substantially vertical edge of each closed door of the vehicle, **characterized in that** it comprises:
- a primary fastener (105), configured to be fixed to a first substantially vertical edge of a door of the vehicle, in the form of a hook configured not to be able to pass into said space and therefore to be unremovable when the door of the vehicle is closed;
- a secondary fastener (110), configured to be fixed to a second substantially vertical edge of the door of the vehicle, said second edge being opposite said first edge;
- a first body (130) configured to extend horizontally over at least one door between the two fasteners, each of said fasteners being configured to be removable without a tool when said door is open; and
- at least one fixed or removable connection (140) for an additional body.

2. Device (10) according to claim 1, that comprises a means for emitting a sound signal and a trigger of the sound signal emission means when the device is touched by another vehicle or crushed between two vehicles.

3. Device (10) according to one of claims 1 or 2, wherein at least one primary fastener is a hook (105, 110), surrounding an edge of the door at least partially, configured to be fixed when the door of the vehicle is open.

4. Device (10) according to one of claims 1 to 3, wherein the connection (140) is a self-gripping fabric.

5. Device (10) according to one of claims 1 to 4, wherein at least one secondary fastener is a magnet fixed on the bodywork of the vehicle.

6. Device (10) according to claim 1 to 5, that comprises an extendable body mount.

7. Device (10) according to claim 6, wherein at least one portion of the body mount is elastic.

8. Device (10) according to one of claims 6 or 7, that comprises a means (150) for longitudinally moving the body on the body mount.

9. Device (10) according to one of claims 1 to 8, that comprises a second body (135) connected to the first body by the connection (140), comprising at least one third fastener (145) to the bodywork of the vehicle, connected to the first body by a flexible connection (140).

10. Device (10) according to claim 9, wherein at least one fastener is a suction cup.

11. Device (20, 30) according to one of claims 1 to 10, **characterized in that** it comprises:
- a body, secured to each said fastener, configured to extend over at least one door, said body comprising:
- a rigid portion (210, 315); and
- a portion (215, 310) to push the rigid portion.

12. Device (20, 30) according to claim 11, that comprises a means (225) for commanding the portion (215, 310) to push the rigid portion during the command to fold at least one door mirror along the door of the vehicle.

13. Vehicle door (60), **characterized in that** it comprises a device (10, 20, 30) for protecting the bodywork of the vehicle according to one of claims 1 to 12.

14. Vehicle comprising at least one protection device according to one of claims 1 to 12 mounted on a door.
